# EUROPÄISCHE PATENTANMELDUNG

(11) **EP 4 420 825 A1**
(43) Veröffentlichungstag der Anmeldung: **28.08.2024**
(21) Anmeldenummer: 24159549.5
(22) Anmeldetag: 26.02.2024
(51) Int. Cl.: B23Q 1/01

(54) **SPIELFREIE ACHSLAGERUNG FÜR GANTRY SYSTEME**

(30) Priorität: 26.02.2023 DE 102023104658
(71) Anmelder: Jenny Science AG, 6026 Rain (CH)
(72) Erfinder: Jenny, Alois, 6026 Rain (CH)
(74) Vertreter: von Bülow & Tamada

(57) **Zusammenfassung**

Die Erfindung betrifft eine Vorrichtung (2) zum Positionieren eines Endeffektors in einem Raum, der durch eine Längsrichtung (4), durch eine Querrichtung (6) quer zur Längsrichtung (4) und durch eine Höhenrichtung (8) quer zur Längsrichtung (4) und quer zur Querrichtung (6) aufgespannt ist, beispielsweise in einer Werkzeugmaschine, umfassend:
- eine in der Längsrichtung (4) ausgerichtete erste Linearschiene (10), auf der in der Längsrichtung (4) beweglich ein erster Längsschlitten (12) angeordnet ist,
- eine parallel zur ersten Linearschiene (10) in der Längsrichtung (4) ausgerichtete zweite Linearschiene (14), auf der in der Längsrichtung beweglich ein zweiter Längsschlitten (16) angeordnet ist, und
- eine einen Querschlitten (18) führende dritte Linearschiene (20), die über ein erstes Führungselement (22) mit dem ersten Linearschlitten (12) und über ein zweites Führungselement (24) mit dem zweiten Linearschlitten (16) verbunden ist,
**dadurch gekennzeichnet, dass** das erste Führungselement (22) als in der Höhenrichtung (8) steifer erster Federaufbau und das zweite Führungselement (24) als in der Höhenrichtung (8) steifer zweiter Federaufbau ausgebildet sind.

## Beschreibung

Die vorliegende Erfindung betrifft eine Vorrichtung zum Positionieren eines Endeffektors gemäß dem Oberbegriff des geltenden Anspruchs 1.

Eine Vorrichtung gemäß dem Oberbegriff des geltenden Anspruchs 1 ist aus der US 9,186,763 B2 bekannt.

Aufgabe der Erfindung ist, die bekannte Vorrichtung zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung, umfasst eine Vorrichtung zum Positionieren eines Endeffektors in einem Raum, der durch eine Längsrichtung, durch eine Querrichtung quer zur Längsrichtung und durch eine Höhenrichtung quer zur Längsrichtung und quer zur Querrichtung aufgespannt ist eine in der Längsrichtung ausgerichtete erste Linearschiene, auf der in der Längsrichtung beweglich ein erster Längsschlitten angeordnet ist, eine parallel zur ersten Linearschiene in der Längsrichtung ausgerichtete zweite Linearschiene, auf der in der Längsrichtung beweglich ein zweiter Längsschlitten angeordnet ist, und eine einen Querschlitten führende dritte Linearschiene, die über eine erstes Führungselement mit dem ersten Linearschlitten und über ein zweites Führungselement mit dem zweiten Linearschlitten verbunden ist. Erfindungsgemäß sind das erste Führungselement als in der Höhenrichtung steifer erster Federaufbau und das zweite Führungselement als in der Höhenrichtung steifer zweiter Federaufbau ausgebildet .

Der angegebenen Vorrichtung, die auch Gantrysystem genannt wird, liegt die Überlegung zugrunde, dass das erste und zweite Führungselement notwendig sind, weil die Anordnung der drei Linearschienen mechanisch überbestimmt ist und nur dann fehlerfrei funktioniert, wenn die erste Linearschiene und die zweite Linearschiene exakt parallel zueinander ausgerichtet sind. Anderenfalls kann die dritte Linearschiene bei Ihrer Bewegung über die erste Linearschiene und die zweite Linearschiene verklemmen. Aufgrund störender Umwelteinflüsse wie Wärmeausdehnung lässt sich diese Gefahr nie ganz vermeiden und muss mechanisch berücksichtigt werden.

Die eingangs genannte Vorrichtung löst dies durch Führungselemente in Form von Längsgleitlagern. Derartige Längsgleitlagern verringern zwar die Gefahr einer Verklemmung der dritten Linearschiene, ist die mechanische Fehlpositionierung allerdings zu groß, dann müssten weitere Führungselemente, wie beispielsweise Drehgleitlager zum Einsatz kommen. Egal welche Gleitlager allerdings zum Einsatz kommen stellt stellt sich nun das Problem eines mechanischen Spiels, welches mit jedem zusätzlich eingeführten Lager wächst. Es kann zwar wieder wie bei der parallelen Ausrichtung der ersten und zweiten Linearschiene durch eine ausreichend Präzision verringert werden, verhindern lässt es sich jedoch nicht und sorgt beispielsweise für Positionierungsfehler in der Höhenrichtung.

Hier greift die Erfindung mit der Idee an, die dritte Linearschiene nicht über mechanische Lager an die erste und zweite Linearschiene anzubinden sondern über Federelemente, die wenigstens in der Höhenrichtung formstabil und damit steif sind. Auf diese Weise wird zumindest in der Höhenrichtung eine absolute Spielfreiheit in der Höhenrichtung erreicht und Positionierungsfehler in der Höhenrichtung werden minimiert.

In einer Weiterbildung der angegebenen Vorrichtung ist der erste Federaufbau steif in der Längsrichtung und elastisch quer zur Längsrichtung und zur Höhenrichtung ausgebildet ist. Auf diese Weise wird erreicht, dass die dritte Linearschiene auch in der Längsrichtung spielfrei positioniert ist und ausschließlich Toleranzen in der Querrichtung ausgleicht.

Grundsätzlich kann der erste Federaufbau beliebig ausgeführt sein, solange sie sich in der Höhenrichtung steif anordnen lassen. So kommen beispielsweise beliebige Biegefedern, wie beispielsweise Tellerfedern in Betracht. In einer besonderen Weiterbildung umfasst der erste Federaufbau als Biegefeder eine Blattfeder, die parallel zur Längsrichtung und parallel zur Höhenrichtung angeordnet ist. Auf diese Weise lässt sich das erste Führungselement preiswert realisieren, weil Blattfedern insbesondere im Vergleich zu Drehgleitlagern und Längsgleitlagern kostengünstig sind. Ferner ist das Einbauvolumen kompakt, weil sich Blattfedern in die Architektur der Vorrichtung integrieren lassen. Schließlich sind Blattfedern gegenüber Gleit- oder Wälzlagern wartungsfrei, weil keinerlei Reibminderungsmittel oder Nachjustierarbeiten notwendig sind.

In einer zusätzlichen Weiterbildung der angegebenen Vorrichtung umfasst der erste Federaufbau eine mit der Blattfeder verbundene weitere Biegefeder in Form einer Blattfeder, die parallel zur Blattfeder angeordnet ist. Auf diese Weise nimmt der erste Federaufbau ausschließlich Bewegungen in der Querrichtung auf hält das dritte Linearschiene stabil in der Querrichtung ausgerichtet, weil keine Bewegung in der Längsrichtung stattfindet.

Besonders bevorzugt ist als Blattfeder ein Federblech gewählt, welches einerseits eine spielfreie Auslenkung in Federrichtung ermöglicht, andererseits aber eine sehr hohe Steifigkeit gegenüber Zug und Druck in Materialrichtung bietet.

In einer bevorzugten Weiterbildung der angegebenen Vorrichtung umfassen die Blattfedern in der Längsrichtung gesehen ein vorderes Ende und ein hinteres Ende, wobei die Blattfedern am vorderen Ende gegeneinander verbiegbar verbunden sind und wobei die erste Blattfeder am hinteren hinteren Ende mit der ersten Linearschiene und die zweite Blattfeder am hinteren Ende mit der dritten Linearschiene verbunden sind. Auf diese Weise lässt der erste Federaufbau ziehharmonikaartig aufbauen und die Elastizität jeder einzelnen Feder über ihre gesamte Länge ausnutzen.

In einer besonders bevorzugten Weiterbildung der angegebenen Vorrichtung umfassen die beiden Blattfedern am hinteren Ende einen aufeinander zu gerichteten Anschlag zur Bewegungsbegrenzung in der Querrichtung. Auf diese Weise lassen sich Überdehnungen der Blattfedern und somit die Gefahr einer unbeabsichtigten Schädigung des ersten Federaufbaus verringern.

In einer weiteren Weiterbildung der angegebenen Vorrichtung sind die beiden Blattfedern aus einem gleichen Material und geometrisch gleich ausgebildet. Auf diese Weise wird der weiter oben genannte Ausgleich von Toleranzen ausschließlich Toleranzen in der Querrichtung in besonders einfacher, bauraumsparender und kotengünstiger Weise erreicht.

In einer anderen Weiterbildung der angegebenen Vorrichtung ist der zweite Federaufbau elastisch um die Höhenrichtung tordierbar 'ausgebildet. Auf diese Weise wird erreicht, dass sich die dritte Linearschiene zum Ausgleich von Fehlpositionierungen in der Querrichtung zum zweiten Längsschlitten verdrehen kann.

In einer noch anderen Weiterbildung umfasst die angegebene Vorrichtung einen zwischen der dritten Linearschiene und dem zweiten Linearschlitten in der Höhenrichtung durchgehend verlaufenden Spalt, der an einer Eintrittsstelle in der Längsrichtung und an eine Austrittsstelle in der Querrichtung ausgerichtet ist, wobei der tordierbare zweite Federaufbau an der Eintrittstelle des Spaltes eine die dritten Linearschiene und den zweiten Linearschlitten miteinander verbindende in der Querrichtung ausgerichtete Blattfeder und an der Austrittstelle eine die dritten Linearschiene und den zweiten Linearschlitten miteinander verbindende in der Längsrichtung ausgerichtete Blattfeder umfasst. Innerhalb dieses Spaltes kann sich die dritte Linearschiene in einer durch die Längsrichtung und die Querrichtung aufgespannten Ebene frei zum Ausgleich von Toleranzen bewegen.

In einer zusätzlichen Weiterbildung umfasst die angegebene Vorrichtung ein Anschlagelement, welches winklig zur in der Querrichtung ausgerichteten Blattfeder und winklig zur in der Längsrichtung ausgerichteten Blattfeder angeordnet ist. Dieses Anschlagelement sorgt insbesondere im Zusammenspiel mit dem Anschlag des ersten Federaufbaus für eine maximal zulässige Länge der dritten Linearschiene und verhindert die Überdehnung aller beteiligten Blattfedern in der angegebenen Vorrichtung wirksam.

In einer weiteren Weiterbildung der angegebenen Vorrichtung ist das Anschlagelement in der Höhenrichtung gleitend auf einer Trageschulter gelagert. Die Trageschulter verhindert eine Fehlpositionierung des Anschlagelementes im Raum und erhöht so die Ausfallsicherheit der angegebenen Vorrichtung weiter.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine Gantrysystem genannte Vorrichtung in einer perspektivischen Ansicht,
Fig. 2 ein erster Federaufbau in dem Gantrysystem der Fig. 1 in einer perspektivischen Ansicht,
Fig. 3 ein zweiter Federaufbau in dem Gantrysystem der Fig. 1 in einer perspektivischen Ansicht,
Fig. 4 eine schematische Ansicht einer Linearschiene in dem Gantrysystem der Fig. 1, und
Fig. 5 eine schematische Ansicht eines Führungselementes in der Linearschiene der Fig. 4.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

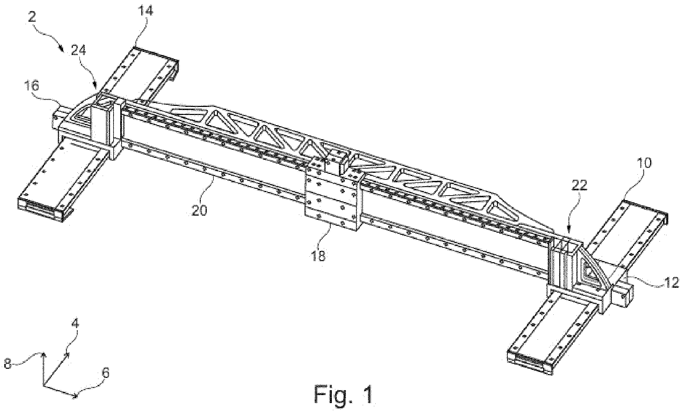

Es wird auf Fig. 1 Bezug genommen, die eine Gantrysystem 2 genannte Vorrichtung in einer perspektivischen Ansicht eines Raumes zeigt, der durch eine Längsrichtung 4, eine Querrichtung 6 quer zur Längsrichtung 4 und eine Höhenrichtung 8, quer zur Längsrichtung 4 und quer zur Querrichtung 6 aufgespannt ist. Unter dem Gantrysystem 2 ist ein elektromechanisches Bewegungssystem einer in der Längsrichtung 4 ausgerichteten geometrischen Achse zu verstehen, bei dem zwei nicht weiter dargestellte separate Vorschubmotoren eine gemeinsame Antriebsachse in der Längsrichtung 4 bewegen. Beiden Vorschubmotoren werden dabei winkelsynchron betrieben. Dies hat zur Folge, dass sich der Gantrysystem 2 so verhält, als hätte es nur einen einzigen Vorschubmotor.

Lässt sich zur Positionierung eines nicht weiter dargstellten Endeffektors in dem Raum beispielsweise in Werkzeugmaschinen einsetzen. Ein bekannter Anwendungszweck sind Portalfräsmaschinen mit Verfahrportal (der sogenannten Gantry-Bauweise), bei denen somit die das Portal tragenden Ständer absolut synchron verfahren werden können.

Das Gantrysystem 2 umfasst eine eine in der Längsrichtung 4 ausgerichtete erste Linearschiene 10, auf der in der Längsrichtung 4 beweglich ein erster Längsschlitten 12 angeordnet ist. Ferner umfasst das Gantrysystem 2 eine parallel zur ersten Linearschiene 10 in der Längsrichtung 4 ausgerichtete zweite Linearschiene 14, auf der in der Längsrichtung 4 beweglich ein zweiter Längsschlitten 16 angeordnet ist. Schließlich ist in dem Gantrysystem noch eine einen Querschlitten 18 führende dritte Linearschiene 20 vorhanden, die über eine erstes Führungselement 22 mit dem ersten Linearschlitten 10 und über ein zweites Führungselement 24 mit dem zweiten Linearschlitten 14. Auf dem Querschlitten 18 lässt sich der nicht weiter gezeigte mit dem Gantrysystem 2 im Raum positionierbare Endeffektor anordnen.

Dieser Aufbau ist grundsätzlich statisch überbestimmt und aus der US 9,186,763 B2 bekannt. Der Sinn dieser mechanisch und statisch eher ungünstigen Bauform des Gantrysystems 2 ist die erhebliche Platzeinsparung gegenüber einer Bauform mit einem in der Längsrichtung 4 vergleichbar weit beweglichem Spanntisch. Entsprechend lässt sich das Gantrysystem 2 regelmäßig bei Werkzeugmaschinen verwenden, die für die Bearbeitung besonders langer Werkstücke konstruiert sind.

Zur absolut spielfreien, kostengünstigen und wartungsfreien Ausführung sind das erste Führungselement 22 als erster Federaufbau und das zweite Führungselement 24 als zweiter Federaufbau ausgebildet, die sich aus Blattfedern in Form von Federblechen zusammensetzen. Auf diese Federaufbauten wird nachstehend näher eingegangen.

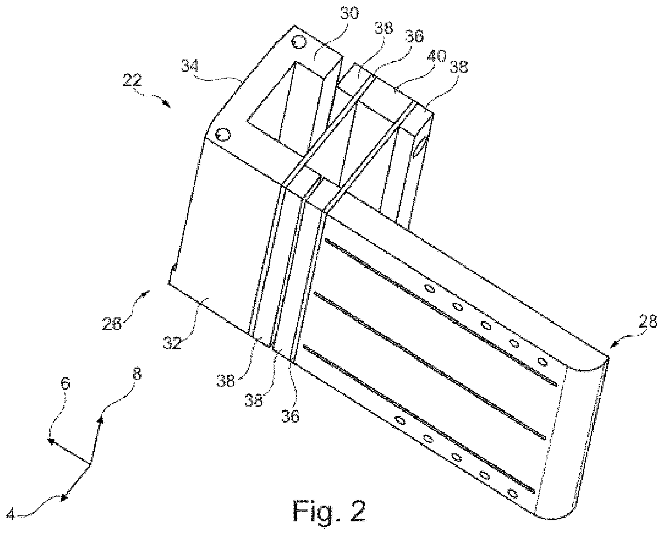

Anhang Fig. 2 wird nachstehend der Federaufbaus das ersten Führungselementes 22 näher erläutert.

Das erste Führungselement 22 umfasst ein erstes Längsschlittenanschlusselement 26 zur Anbindung des ersten Führungselementes 22 an den ersten Längsschlitten 12 und ein Querschlittenanschlusselement 28 zur Anbindung des ersten Führungselementes 22 an den Querschlitten 18.

Das erste Längsschlittenanschlusselement 26 ist in einem in der Höhenrichtung 8 gesehenen Querschnitt U-Profilförmig ausgebildet, wobei das U-Profil einen ersten Schenkel 30 und einen in der Längsrichtung nach dem ersten Schenkel 30 angeordneten zweiten Schenkel 32 besitzt, die in der Querrichtung 6 gesehen an ihrem Ende über eine Grundplatte 34 miteinander verbunden sind. Dabei ist der erste Schenkel 30 entgegen der Querrichtung 6 gesehen kürzer ausgebildet, als der zweite Schenkel 32.

Auf das entgegen der Querrichtung 6 gesehene, der Grundplatte 34 gegenüberliegende Ende des zweiten Schenkels 32 ist eine sich entgegen der Längsrichtung 4 erstreckende Blattfeder in Form eines Federblechs 36 aufgesetzt und auf der dem zweiten Schenkel 32 gegenüberliegenden Seite mit einer Andruckplatte 38 am zweiten Schenkel 32 befestigt.

Entgegen der Längsrichtung 4 gesehen ist am anderen Ende des Federblechs 36 ein Verbindungselement 40 aufgesetzt und in der Querrichtung 6 auf der gegenüberliegenden Seite des Federblechs 36 durch eine weitere Andruckplatte 38 befestigt. Auf das Verbindungselement 40 ist entgegen der Querrichtung 6 gesehen auf das gegenüberliegende Ende ein weiteres Federblech 36 aufgesetzt und über eine weitere Andruckplatte 38 am Verbindungselement 40 befestigt. Abschließend schließt sich an das weitere Federblech 36 am in der Längsrichtung 4 gesehenen gegenüberliegenden Ende das Querschlittenanschlusselement 28 an, das in der Querrichtung 6 gesehen ebenfalls über eine Andruckplatte 38 auf der dem Querschlittenanschlusselement 28 gegenüberliegenden Seite des weiteren Federblechs 36 mit diesem verbunden ist.

Die Federbleche 36 sind in der Längsrichtung 4 gesehen gleich lang ausgebildet, so dass das Querschlittenanschlusselement 28 und der zweite Schenkel 32 auf einer in der Querrichtung 6 verlaufenden Linie verlaufen. Durch die parallele Anordnung der Federbleche 36 kann sich der Federaufbau des ersten Führungselementes 22 im Falle von Querkräften in und entgegen der Querrichtung 6 elastisch verformen, ist allerdings gegenüber Längskräften in und entgegen der Längsrichtung 4 steif. Gibt der Federaufbau des ersten Führungselementes 22 bei der Aufnahme einer Querkraft in der Querrichtung 6 nach, so wird er in der Querrichtung 6 solange gestaucht, bis die Andruckplatten 38 am zweiten Schenkel 32 und am Querschlittenanschlusselement 28 in beziehungsweise entgegen der Querrichtung 6 aufeinander treffen. Diese Andruckplatten 38 dienen daher nicht nur zur Erhöhung eines Reibschlusses sondern auch als Anschläge zur Bewegungsbegrenzung in der Querrichtung 6.

Auf die Hintergründe dieses in der Längsrichtung 4 steifen und in der Querrichtung 6 elastischen Aufbaus wird an späterer Stelle näher eingegangen.

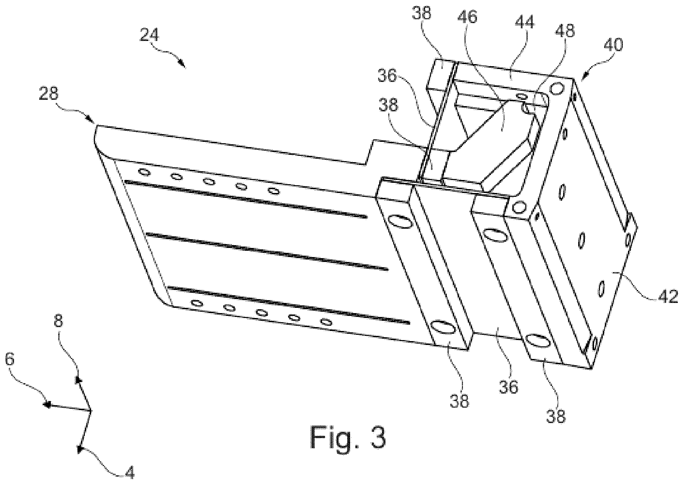

Zuvor soll anhand Fig. 3 der Federaufbaus im zweiten Führungselement 24 näher erläutert werden.

Das zweite Führungselement 24 umfasst ein zweites Längsschlittenanschlusselement 40 zur Anbindung des zweiten Führungselementes 24 an den zweiten Längsschlitten 14 und ein weiteres Querschlittenanschlusselement 28 zur Anbindung des zweiten Führungselementes 24 an den Querschlitten 18.

Das zweite Längsschlittenanschlusselement 40 ist in einem in der Höhenrichtung 8 gesehenen Querschnitt L-Profilförmig ausgebildet, wobei das L-Profil einen in der Längsrichtung ausgerichteten ersten Schenkel 42 und einen in der Querrichtung ausgerichteten zweiten Schenkel 44 besitzt.

Am freien Ende des ersten Schenkels 42 ist über eine Andruckplatte 38 ein in der Querrichtung 6 ausgerichtetes Federblech 36 befestigt, während am freien Ende des zweiten Schenkels 44 ein in der Längsrichtung ausgerichtetes Federblech 36 über eine Andruckplatte 38 befestigt ist. Die jeweils gegenüberliegenden Seite der beiden Federbleche 36 laufen aufeinander zu und sind über Andruckplatten 38 am Querschlittenanschlusselement 28 befestigt. Die beiden so winklig zueinander angeordneten Federbleche 36 versteifen das zweite Führungselement 24 sowohl in der Längsrichtung 4 als auch in der Querrichtung 6, so dass das zweite Führungselement 24 lediglich für durch Drehmomente um die Höhenrichtung 8 hervorgerufene Bewegung elastisch ausgeführt ist.

Um diese Drehbewegungen zu begrenzen weist das zweite Führungselement 24 ein Anschlagelement 46 auf, welches an der Verbindungsstelle der beiden Federbleche 36 befestigt und mit einem freihen Ende zur Verbindungsstelle der beiden Schenkel 42, 44 hin ausgerichtet ist. Auf diese Weise schlägt das Anschlagelement 46 bei zu hohen Drehbewegungen an einen der Schenkel 42, 44 an und verhindert so eine Überbeanspruchung der Federbleche 36. Dabei liegt das Anschlagelement 48 gleitend auf einer Schulter 48 auf, die an den zu den Federblechen 36 gerichteten Seiten der Schenkel 42, 44 des zweiten Längsschlittenanschlusselementes 40 ausgebildet ist.

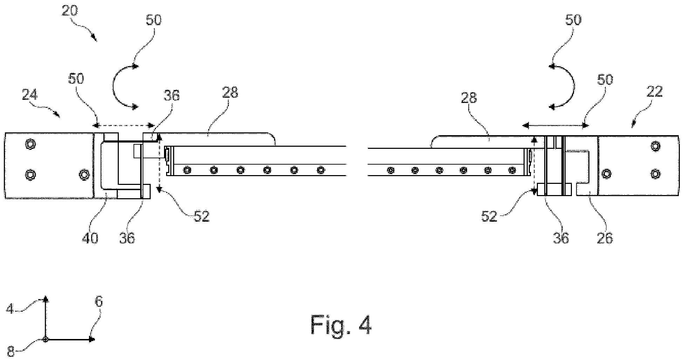

Die Wirkung der der beiden Führungselemente 22, 24 soll nun anhand der Fig. 4 näher erläutert werden. Darin sind in der Ebene, die durch die Längsrichtung 4 und die Querrichtung 6 aufgespannt wird, durch die Führungselemente 22, 24 elastisch zugelassene Bewegungen 50 mit durchgezogenen Doppelpfeilen angedeutet, während durch die Führungselemente 22, 24 blockierte Bewegungen 52 mit gepunkteten Doppelpfeilen angedeutet. Bewegungen in Ebenen, die parallel zur Höhenrichtung 8 angeordnet sind, blockieren die Führungselemente 22, 24 grundsätzlich, so dass auf eine entsprechende Ansicht der Kürze halber verzichtet wurde.

Für die Bewegung der dritten Linearschiene 20 in und entgegen der Längsrichtung 4 erfordert eine exakte parallel Ausrichtung der beiden die beiden anderen Linearschienen 10, 14 zueinander. Fehlpositionierungen aufgrund von Toleranzen, Wärmebewegungen und dergleichen erfordern allerdings einen Bewegungsausgleich von einigen Hunderstel Millimetern in der Querrichtung 6 oder von einigen Winkelminuten um die Höhenrichtung. Dieser Bewegungsausgleich wird durch die zugelassenen Bewegungen 50 erreicht. Alle anderen Bewegungen 52 sind unterbunden und können folglich auch kein Spiel in das Gantrysystem 2 einbringen.

Allerdings bewirken die Federbleche 36 auch eine absolute Spielfreiheit der zugelassenen Bewegungen 50, weil die Bewegung durch eine Materialverformung im elastischen Bereich der Federbleche 36 erfolgt. Um ein Verlassen dieses elastische Bereiches zu verhindern, sind die Anschlagelemente 38, 46 vorhanden.

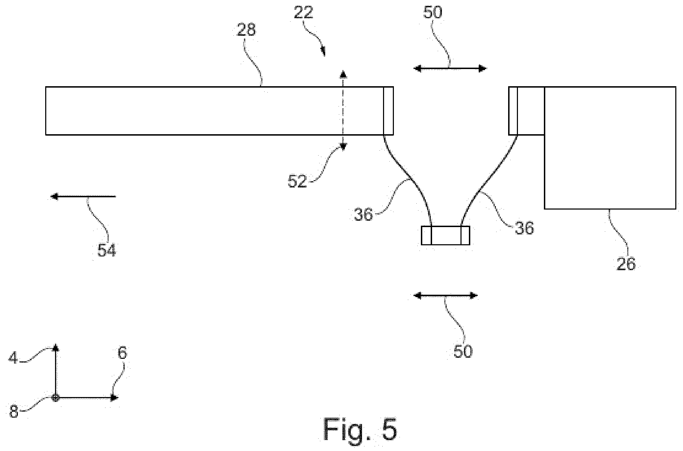

Diese absolute Spielfreiheit ist in Fig. 5 veranschaulicht, in der eine externe Kraft 54 aufgrund von Wärmeausgleichsbewegungen auf die am Querschlittenanschlusselement 28 angeschlossene dritte
Linearschiene 20 wirkt.

Die Unterbindung der anderen Bewegungen 52 wird in einfachster Weise dadurch erreicht, wenn beide Federbleche 36 aus dem gleichen Material ausgebildet und geometrisch gleich aufgebaut sind, denn dann verformen sich die beiden Federbleche achsensymmetrisch zueinander.

Da die Federbleche 36 kostengünstig zu beschaffen sind, lassen sich die Führungselemente 22, 24 äußerst preiswert aufbauen. Zudem ist das Einbauvolumen der Federbleche 36 flexibel gestaltbar und kompakt. Auch sind die Federbleche 36 wartungsfrei, da keine Schmierungen oder sonstigen Einstellarbeiten benötigt werden.

## Patentansprüche

1. Vorrichtung (2) zum Positionieren eines Endeffektors in einem Raum, der durch eine Längsrichtung (4), durch eine Querrichtung (6) quer zur Längsrichtung (4) und durch eine Höhenrichtung (8) quer zur Längsrichtung (4) und quer zur Querrichtung (6) aufgespannt ist, beispielsweise in einer Werkzeugmaschine, umfassend:
- eine in der Längsrichtung (4) ausgerichtete erste Linearschiene (10), auf der in der Längsrichtung (4) beweglich ein erster Längsschlitten (12) angeordnet ist,
- eine parallel zur ersten Linearschiene (10) in der Längsrichtung (4) ausgerichtete zweite Linearschiene (14), auf der in der Längsrichtung beweglich ein zweiter Längsschlitten (16) angeordnet ist, und
- eine einen Querschlitten (18) führende dritte Linearschiene (20), die über ein erstes Führungselement (22) mit dem ersten Linearschlitten (12) und über ein zweites Führungselement (24) mit dem zweiten Linearschlitten (16) verbunden ist,
**dadurch gekennzeichnet, dass** das erste Führungselement (22) als in der Höhenrichtung (8) steifer erster Federaufbau und das zweite Führungselement (24) als in der Höhenrichtung (8) steifer zweiter Federaufbau ausgebildet sind.

2. Vorrichtung (2) nach Anspruch 1, wobei der erste Federaufbau (22) steif in der Längsrichtung (4) und elastisch in der Querrichtung (6) ausgebildet ist.

3. Vorrichtung (2) nach Anspruch 2, wobei der erste Federaufbau (22) eine Blattfeder (36) umfasst, die parallel zur Längsrichtung (4) und parallel zur Höhenrichtung (8) angeordnet ist.

4. Vorrichtung (2) nach Anspruch 3, wobei der erste Federaufbau (22) eine mit der Blattfeder (36) verbundene weitere Blattfeder (36) umfasst, die parallel zur Blattfeder (36) angeordnet ist.

5. Vorrichtung (2) nach Anspruch 4, wobei die Blattfedern (36) in der Längsrichtung (4) gesehen ein vorderes Ende und ein hinteres Ende umfassen, wobei die Blattfedern (36) am vorderen Ende gegeneinander verbiegbar verbunden sind und wobei die erste Blattfeder am hinteren hinteren Ende mit dem ersten Längsschlitten (12) und die zweite Blattfeder (36) am hinteren Ende mit der dritten Linearschiene (20) verbunden sind.

6. Vorrichtung (2) nach Anspruch 5, wobei die beiden Blattfedern (36) am hinteren Ende einen aufeinander zu gerichteten Anschlag (38) zur Bewegungsbegrenzung in der Querrichtung (6) umfassen.

7. Vorrichtung (2) nach einem der Ansprüche 4 bis 6, wobei die beiden Blattfedern (36) aus einem gleichen Material und geometrisch gleich ausgebildet sind.

8. Vorrichtung (2) nach einem der vorstehenden Ansprüche, wobei der zweite Federaufbau (24) elastisch um die Höhenrichtung (8) tordierbar ausgebildet ist.

9. Vorrichtung (2) nach Anspruch 8, umfassend einen zwischen der dritten Linearschiene (20) und dem zweiten Linearschlitten (16) in der Höhenrichtung (8) durchgehend verlaufenden Spalt, der an einer Eintrittsstelle in der Längsrichtung (4) und an eine Austrittsstelle in der Querrichtung (6) ausgerichtet ist, wobei der tordierbare zweite Federaufbau (24) an der Eintrittstelle des Spaltes eine die dritten Linearschiene (20) und den zweiten Linearschlitten (16) miteinander verbindende in der Querrichtung (6) ausgerichtete Blattfeder (36) und an der Austrittstelle eine die dritten Linearschiene (20) und den zweiten Linearschlitten (16) miteinander verbindende in der Längsrichtung (4) ausgerichtete Blattfeder (36) umfasst.

10. Vorrichtung (2) nach Anspruch 9, umfassend ein Anschlagelement (46), welches winklig zur in der Querrichtung (6) ausgerichteten Blattfeder (36) und winklig zur in der Längsrichtung (4) ausgerichteten Blattfeder (36) angeordnet ist.
